# EUROPÄISCHE PATENTSCHRIFT

(11) **EP 1 348 875 B1**
(45) Veröffentlichungstag und Bekanntmachung des Hinweises auf die Patenterteilung: **29.12.2004**
(21) Anmeldenummer: 03006619.5
(22) Anmeldetag: 25.03.2003
(51) Int. Cl.: F15B 13/04, F16K 27/04, F16K 11/07, B29C 45/14

(54) **Pneumatisches Schieberventil mit einem spritzgegossenen Ventilgehäuse**
Pneumatic spool valve with an injection molded housing
Vanne pneumatique à tiroir avec un boitier moulé par injection

(30) Priorität: 25.03.2002 DE 10213258
(43) Veröffentlichungstag der Anmeldung: 01.10.2003
(73) Patentinhaber: Bosch Rexroth AG, 70442 Stuttgart (DE)
(72) Erfinder: Kulmann, Erwin, 71706 Markgröningen (DE); Bergmann, Klaus, Ing., 70499 Stuttgart (DE)
(74) Vertreter: Maiwald Patentanwalts GmbH

(56) Entgegenhaltungen:
- EP-A- 0 443 779
- DE-A- 19 745 802
- PATENT ABSTRACTS OF JAPAN vol. 1998, no. 12, 31. Oktober 1998 (1998-10-31) -& JP 10 184967 A (HITACHI CONSTR MACH CO LTD), 14. Juli 1998 (1998-07-14)

## Beschreibung

Die vorliegende Erfindung betrifft ein pneumatisches Schieberventil zum Schalten eines Druckluftflusses zwischen mehreren an einem Ventilgehäuse aus spritzgegossenem Kunststoff angeordneten äußeren Anschlüssen mittels eines Ventilschiebers, der im Ventilgehäuse innerhalb einer korrespondierenden Schieberbohrung axial verschiebbar angeordnet ist, die durch mehrere axial, beabstandete umspritzte Ventilbuchsen gebildet ist, zwischen denen mit den äußeren Anschlüssen in Verbindung stehende Druckmittelkammern angeordnet sind.

Die Ventilgehäuse pneumatischer Schieberventile sind in allgemein bekannter Weise entweder mehrteilig oder einteilig aufgebaut. Mehrteilige Ventilgehäuse werden eingesetzt, um eine Montage der im Ventilgehäuse enthaltenen Bauteile zu vereinfachen. Hierfür sind diese mehrteiligen Ventilgehäuse meist in der Ebene des Ventilschiebers geteilt ausgeführt. Die beiden Gehäuseteile werden nach der Montage der innenliegenden Ventilbestandteile über eine Schraubverbindung miteinander verbunden, wobei eine dazwischenliegende Dichtung vorzusehen ist. Pneumatische Schieberventile mit einem derartigen mehrteiligen Ventilgehäuse sind jedoch recht breitbauend, da eine gewisse Materialstärke als Anlagefläche für die Gehäusedichtung erforderlich ist.

Der Trend bei pneumatischen Schieberventilen geht jedoch zu immer geringeren Baubreiten, da mit schmalbauenden Einzelventilen der Aufbau einer insgesamt kompakten Ventileinheit möglich ist. Eine Ventileinheit besteht aus einer Mehrzahl solcher aneinandergereihter schmalbauender Einzelventile. Für solche schmalbauenden Einzelventile haben sich einteilige Ventilgehäuse durchgesetzt, da hiermit eine extreme Baubreitenverringerung möglich ist, ohne dass im gleichen Zuge eine überproportionale Durchflussverringerung verursacht wird. Allerdings erfordern solche einteiligen Ventilgehäuse nach ihrer Formgebung durch 'Spritzgießen einer anschließenden aufwendigen spannenden Nachbearbeitung, um insbesondere die innenliegende Ventilbohrung zur Aufnahme des Ventilschiebers zu fertigen, welche neben einer besonders glatten Oberfläche auch mit diversen Einlaufschrägen und abgerundeten Steuerkanten zu versehen ist.

Aus der DE 197 45 802 A1 ist ein einteiliges Ventilgehäuse bekannt, bei dem der vorstehend aufgezeigte Nachteil dadurch behoben wird, dass zur Ausbildung der Schieberbohrung einzelne vorgefertigte Ventilbuchsen verwendet werden, welche zur Bildung des Ventilgehäuses mit Kunststoff umspritzt werden. Die einzelnen Ventilbuchsen weisen an ihrem Außenumfang zur axialen Fixierung jeweils mindestens eine ringförmige Nut oder eine zumindest bereichsweise ringförmige Erhebung auf, welche nach dem Umspritzen eine formschlüssige Verbindung mit dem Ventilgehäuse eingehen. Die einzelnen Ventilbuchsen bestehen hier aus einem metallischen Werkstoff und werden vor dem Spritzgießen in die Spritzgießform eingelegt und von Werkzeugstempeln an ihren zukünftigen Bestimmungsorten fixiert. Nach dem Spritzgießen sind die Ventilbuchsen unlösbar, formschlüssig mit dem Ventilgehäuse verbunden. Die Anwendung dieser Inserttechnik zur Ausbildung einer Schieberbohrung mit Steuerkanten und Einlaufschrägen ermöglicht einteilige, einfach gestaltete Ventilgehäuse mit einer vergleichsweise hohen Durchflussrate. Eine spannende Nachbearbeitung ist nicht mehr erforderlich. Die integrierten Ventilbuchsen lassen sich in einer kostengünstigen, reproduzierbaren Massenproduktion fertigen. Ventilinterne Strömungsverhältnisse und Kanalgestaltungen müssen teilweise nicht mehr den Anforderungen an die Entformbarkeit geopfert werden.

In der Praxis hat sich jedoch herausgestellt, dass bei Dauerbelastung oder extremen Temperaturunterschieden ein Spiel zwischen den Ventilbuchsen und dem Ventilgehäuse entstehen kann, was die Funktionsweise des Schieberventils beeinträchtigt. Über einen im Extremfall entstehenden Spielspalt kann ungewollt Druckmittel zwischen benachbarten Druckmittelkammern überströmen. Um dieses zu verhindern ist bereits versucht worden, zwischen der Ventilbuchse und dem Ventilgehäuse ein Dichtelement in Form eines O-Ringes anzuordnen; allerdings kann es beim Umspritzen der Ventilbuchsen zur Herstellung des Ventilgehäuses im Einzelfall vorkommen, dass diese Dichtelemente aus ihrer Solllage gedrückt werden, was ebenfalls eine zuverlässige Reproduzierbarkeit der so hergestellten Ventilgehäuse verhindert.

Es ist daher die Aufgabe der vorliegenden Erfindung ein pneumatisches Schieberventil der vorstehend beschriebenen Art dahingehend weiter zu verbessern, dass eine exakte Ventilfunktion selbst bei extremen Beanspruchungen des Schieberventils möglich ist und das zum Einsatz kommende Ventilgehäuse in einer Serienfertigung mit gleichbleibender Qualität reproduzierbar ist.

Die Aufgabe wird ausgehend von einem pneumatischen Schieberventil gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die bei der Herstellung des einstückigen Ventilgehäuses in Inserttechnik zum Einsatz kommenden Ventilbuchsen aus einem Kunststoff bestehen, der dieselbe Schmelztemperatur wie der Kunststoff des Ventilgehäuses aufweist, um beim Umspritzen eine stoffschlüssige Verbindung mit dem Ventilgehäuse einzugehen.

Der Vorteil der Erfindung liegt insbesondere darin, dass eine neue Verbindungsart zwischen den Ventilbuchsen und dem Ventilgehäuse zum Einsatz kommt. Bei der stoffschlüssigen Verbindung ist ein Spielspalt zwischen den beiden zu verbindenden Teilen ausgeschlossen. Der Stoffschluss wird direkt beim Umspritzen der Ventilbuchsen, also im selben Arbeitsgang, hergestellt. In einfacher Weise lässt sich der dichtende Stoffschluss dadurch erreichen, dass die Materialien der beiden zu verbindenden Teile dieselbe Schmelztemperatur aufweisen. Ein Lösen der Ventilbuchsen innerhalb des erfindungsgemäß ausgebildeten Ventilgehäuses wird somit zuverlässig verhindert. Da die Materialeigenschaften des Kunststoffes beider miteinander zu verbindenden Teile gleich sind, liegen die gleichen Wärmeausdehnungskoeffizienten vor, so dass die erfindungsgemäße Verbindung selbst bei hohen Temperaturschwankungen beständig bleibt.

Zur Verbesserung des Anschmelzens der Ventilbuchse während des Umspritzens kann diese gemäß einer die Erfindung verbessernden Maßnahme an der umspritzten Außenoberfläche spitzen- oder fahnenartige Anformungen geringer Materialstärke aufweisen. Diese Anformungen erreichen während des Umspritzens wegen der geringen Materialstärke schnell die Schmelztemperatur, so dass hierüber zuverlässig die angestrebte stoffschlüssige Verbindung hergestellt werden kann. Versuche haben erwiesen, dass die spitzen- oder fahnenartigen Anformungen der Ventilbuchse vorzugsweise in einen Winkel von 25° bis 35° auslaufen sollen. Die Ausbildung der Anformungen der Ventilbuchse in diesem speziellen Winkelbereich gewährleistet zum Einen ein zuverlässiges Anschmelzen der Materialoberfläche an den Spitzen zur Herstellung der stoffschlüssigen Verbindung; andererseits haben sich die Anformungen bei axialer Belastung der Ventilbuchse auch als ausreichend stabil erwiesen, so dass der erfindungsgemäß realisierte Stoffschluss in vorteilhafter Weise mit einem zusätzlichen Formschluss kombiniert werden kann. In Ergebnis dessen entsteht eine Verbindung von äußerster Stabilität.

Vorzugsweise wird das Ventilgehäuse im Gegensatz zur Ventilbuchse aus einem verstärkten Kunststoff hergestellt, um die erforderliche Gehäusestabilität bei der Befestigung von hieran angrenzenden Bauteilen sicher zu stellen. Als Verstärkungsmaterial kommen hierbei insbesondere Glasfasern zur Anwendung. Als besonders günstig hat es sich erwiesen, zur Herstellung des Ventilgehäuses Polyamid (PA) mit einem Anteil von bis zu 60% an Glasfasern zu verwenden. Dem entsprechend bestehen die mit diesem Material umspritzten Ventilbuchsen ebenfalls aus Polyamid. Das zur Herstellung der Ventilbuchsen verwendete Polyamid ist jedoch nicht mit Glasfasern zu verstärken, weil ansonsten durch Abrieb freigelegte Glasfasern im Bereich der Einführungsschräge und -radius zwischen dem Ventilschieber und der Ventilbuchse die dazwischen angeordnete Dichtung beschädigen würden.

Das aus glasfaserverstärktem Kunststoff bestehende Ventilgehäuse eignet sich besonders gut zum Verschrauben mit einer korrespondierenden druckluftverteilenden Grundplatte einer Ventileinheit. Durch den Glasfaseranteil im Kunststoff wird das Material an einem Kriechen, d. h. einem langsamen plastischen Verformen bei Druckbeanspruchung, gehindert. Durch das aus dem verstärkten Kunststoff bestehende Ventilgehäuse verläuft zumindest eine Durchgangsbohrung zur Aufnahme einer zugeordneten Schraube, deren Druck das Ventilgehäuse widersteht.

Vorzugsweise ist mindestens ein zur axialen Verstellung des Ventilschiebers nach Art einer Vorsteuerung dienendes Pilotventil an das Ventilgehäuse mittels einer Stiftverbindung angeflanscht. Als weiteres Anbauteil kann mindestens ein Deckelelement zum endseitigen Verschließen der Ventilbohrung am Ventilgehäuse angebracht werden. Die Anbringung erfolgt vorzugsweise mittels selbstschneidender Schrauben, die in das Material des Ventilgehäuses eingeschraubt sind.

Gemäß einer bevorzugten Ausführungsform der Erfindung sind genau vier einzelne baugleiche Ventilbuchsen im Ventilgehäuse zur Bildung der Ventilbohrung angeordnet, wobei im Zusammenwirken mit den jeweils benachbarten Druckmittelkammern ein 5/2-Wegeventil gebildet ist. In analoger Weise sind auch pneumatische Schieberventile mit anderen Wegeventilfunktionen herstellbar.

Weitere die Erfindung verbessernde Maßnahmen werden nachfolgend gemeinsam mit der Beschreibung eines bevorzugten Ausführungsbeispiels der Erfindung anhand der Figuren näher dargestellt. Es zeigt:
- Fig. 1: einen Längsschnitt durch ein pneumatisches Schieberventil mit umspritzten Ventilbuchsen, und
- Fig. 2: ein Detail (D) im Bereich der Verbindung zwischen einer Ventilbuchse und dem Ventilgehäuse.

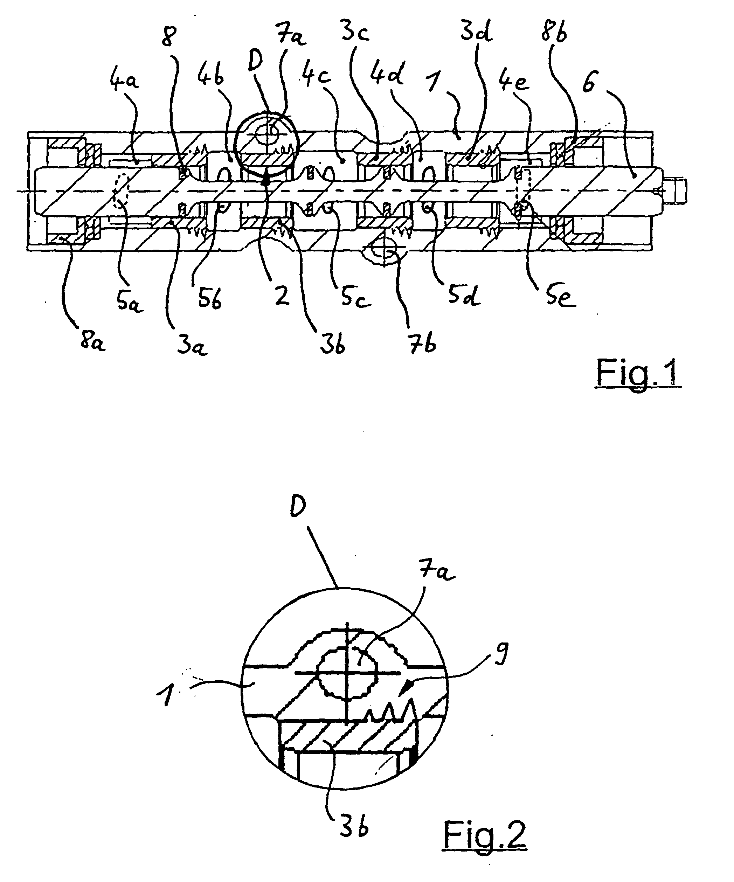

Ein pneumatisches Schieberventil gemäß Fig. 1 weist ein Ventilgehäuse 1 aus einem spritzgegossenen glasfaserverstärkten Polyamid auf, durch das sich in Längsrichtung eine Schieberbohrung 2 erstreckt. Die Schieberbohrung 2 wird durch mehrere, axial beabstandete Ventilbuchsen 3a bis 3d gebildet. Zwischen bzw. neben den Ventilbuchsen 3a bis 3d sind Druckmittelkammern 4a bis 4e angeordnet. Jede Druckmittelkammer 4a bis 4e steht mit zugeordneten äußeren Anschlüssen 5a bis 5e (teilweise verdeckt dargestellt) in Verbindung. In diesem Ausführungsbeispiel dient der Anschluss 5c als zentraler Speisedruckanschluss, die benachbarten Anschlüsse 5b und 5d sind Arbeitsanschlüsse. Die äußeren Anschlüsse 5a sowie 5e sind als Entlüftungsanschlüsse ausgeführt. Zwischen diesen Anschlüssen 5a und 5e schaltet ein axial innerhalb der Schieberbohrung 2 bewegbarer Ventilschieber 6 den Druckluftfluss. Der Ventilschieber 6 ist über eine allgemein bekannte Vorsteuerung mittels eines - hier nicht weiter dargestellten - Pilotventils axial verstellbar. Die Ventilbohrung 2 ist beidseits des Ventilgehäuses 1 über stirnseitig angeordnete Deckelelemente 8a sowie 8b verschlossen. Am Ventilschieber 6 sind mehrere Dichtringe 8 angeordnet, die jeweils dichtend am Innendurchmesser jeder Ventilbuchse 3a bis 3d zur Anlage kommen und insoweit eine dynamische Dichtung bilden.

Insgesamt bildet dieser Aufbau ein 5/2-Wegeventil. Die Befestigung des Ventilgehäuses 1 an eine - hier nicht weiter dargestellte - druckluftverteilende Grundplatte erfolgt über eine Schraubverbindung. Zu diesem Zweck weist das Ventilgehäuse 1 zwei diagonal versetzt zueinander angeordnete Durchgangsbohrungen 7a, 7b auf, welche der Aufnahme von entsprechenden Schrauben dienen.

Der Kunststoff des Ventilgehäuses 1 besteht hier aus Polyamid (PA) das mit zirca 50% Glasfasern verstärkt ist. Dagegen bestehen die umspritzten Ventilbuchsen 3a bis 3d aus einem unverstärkten Polyamid.

Wie aus dem Detail D gemäß Figur 2 hervorgeht, ist jede Ventilbuchse - hier exemplarisch Ventilbuchse 3b - mit dem Kunststoff des Ventilgehäuses 1 umspritzt. Wegen der Materialgleichheit hinsichtlich des Kunststoffes besitzt die Ventilbuchse 3b die gleiche Schmelztemperatur wie das Ventilgehäuse 1. Beim Umspritzen im Spritzgießwerkzeug, in welchem die Ventilbuchsen 3a bis 3d gemäß der Inserttechnik eingelegt werden und anschließend umspritzt werden, bildet sich im Zuge des Spritzgießens des Ventilgehäuses 1 eine stoffschlüssige Verbindung mit den Ventilbuchsen 3a bis 3d aus, weil die in Kontakt tretenden Oberflächen miteinander verschmelzen. Zur Verbesserung des Anschmelzens der Ventilbuchse 3b weist diese an der Außenoberfläche spitzenartige Anformungen 9 auf, die in einem Winkel von zirca 30° auslaufen. Diese Anformungen begünstigen wegen der geringen Materialstärke im Spitzenbereich den Stoffschluss zwischen der Ventilbuchse 3b und dem Ventilgehäuse 1. Daneben gewährleisten die Anformungen 9, welche außenradial an der Ventilbuchse 3b angeordnet sind, auch einen stabilen Formschluss, so dass ein Höchstmaß an Belastbarkeit der Ventilbuchse 3b in Axialrichtung gewährleistet wird.

Die vorliegende Erfindung ist nicht beschränkt auf das vorstehend beschriebene bevorzugte Ausführungsbeispiel. Es sind vielmehr auch Abwandlungen hiervon denkbar, die von der hier beanspruchten technischen Lehre Gebrauch machen. So ist es beispielsweise auch denkbar mit der Erfindung pneumatische Schieberventile mit 2/2-, 3/2-, 5/3-Wegefunktion und dergleichen herzustellen. Daneben ist auch die Verwendung anderer geeigneter Kunststoffe anstelle von Polyamid denkbar, sofern sich diese für das Spritzgießen eignen und hierbei eine stoffschlüssige Verbindung zwischen den Ventilbuchsen 3a bis 3d und dem Ventilgehäuse 1 ermöglichen.

### Bezugszeichenliste

- **1**: Ventilgehäuse
- **2**: Ventilbohrung
- **3**: Ventilbuchse
- **4**: Druckmittelkammer
- **5**: Anschluss
- **6**: Ventilschieber
- **7**: Durchgangsbohrung
- **8**: Deckelelement
- **9**: Anformung

## Patentansprüche

1. Pneumatisches Schieberventil zum Schalten eines Druckluftflusses zwischen mehreren an einem Ventilgehäuse (1) aus spritzgegossenem Kunststoff angeordneten äußeren Anschlüssen (5a - 5e) mittels eines Ventilschiebers (6), der im Ventilgehäuse (1) innerhalb einer korrespondierenden Schieberbohrung (2) axial verschiebbar angeordnet ist, die durch mehrere axial beabstandete umspritzte Ventilbuchsen (3a - 3d) gebildet ist, zwischen denen mit den äußeren Anschlüssen (5a - 5e) in Verbindung stehende Druckmittelkammern (4a - 4e) angeordnet sind,
**dadurch gekennzeichnet, dass** die Ventilbuchsen (3a - 3d) aus einem Kunststoff bestehen, der dieselbe Schmelztemperatur wie der Kunststoff des Ventilgehäuses (1) aufweist, um beim Umspritzen eine stoffschlüssige Verbindung mit dem Ventilgehäuse (1) einzugehen.

2. Pneumatisches Schieberventil nach Anspruch 1,
**dadurch gekennzeichnet, dass** zur Verbesserung des Anschmelzens der Ventilbuchse (3a-3d), diese an der umspritzten Außenoberfläche spitzen- oder fahnenartige Anformungen (9) geringer Materialstärke aufweist.

3. Pneumatisches Schieberventil nach Anspruch 2,
**dadurch gekennzeichnet, dass** die spitzen- oder fahnenartigen Anformungen (9) der Ventilbuchse (3a - 3d) in einen Winkel von 25° bis 35° auslaufen, um einen mit dem Stoffschluss kombinierten stabilen Formschluss zwischen der Ventilbuchse (3a - 3d) und dem Ventilgehäuse (1) zu gewährleisten.

4. Pneumatisches Schieberventil nach Anspruch 1,
**dadurch gekennzeichnet, dass** das Ventilgehäuse (1) im Gegensatz zur Ventilbuchse (3a - 3d) aus einem verstärkten Kunststoff hergestellt ist, um die erforderliche Gehäusestabilität bei der Befestigung angrenzender Bauteile sicherzustellen.

5. Pneumatisches Schieberventil nach Anspruch 4,
**dadurch gekennzeichnet, dass** der Kunststoff des Ventilgehäuses (1) aus einem Polyamid (PA) besteht, das mit bis zu 60% Glasfasern verstärkt ist.

6. Pneumatisches Schieberventil nach Anspruch 1,
**dadurch gekennzeichnet, dass** die umspritzten Ventilbuchsen aus einem Polyamid (PA) bestehen.

7. Pneumatisches Schieberventil nach einem der vorstehenden Ansprüche,
**dadurch gekennzeichnet, dass** die Befestigung des Ventilgehäuses (1) an eine druckluftverteilende Grundplatte über eine Schraubverbindung erfolgt, wozu durch das aus dem verstärkten Kunststoff bestehende Ventilgehäuse (1) zumindest eine Durchgangsbohrung (7a, 7b) zur Aufnahme einer korrespondierenden Schraube verläuft.

8. Pneumatisches Schieberventil nach einem der vorstehenden Ansprüche,
**dadurch gekennzeichnet, dass** mindestens ein zur axialen Verstellung des Ventilschiebers (6) nach Art einer Vorsteuerung dienendes Pilotventil an das Ventilgehäuse (1) mittels einer Stiftverbindung angeflanscht ist.

9. Pneumatisches Schieberventil nach einem der vorstehenden Ansprüche,
**dadurch gekennzeichnet, dass** mindestens ein Deckelelement (8a, 8b) die Ventilbohrung (2) des Ventilgehäuses (1) an mindestens einem Ende mittels selbstschneidender Schrauben verschließt, die in das Ventilgehäuse (1) eingeschraubt sind.

10. Pneumatisches Schieberventil nach einem der vorstehenden Ansprüche,
**dadurch gekennzeichnet, dass** genau vier einzelne, baugleiche Ventilbuchsen (3a - 3d) im Ventilgehäuse (1) zur Bildung der Ventilbohrung (2) angeordnet sind, wobei in Zusammenwirken mit den jeweils benachbarten Druckmittelkammern (4a - 4e) ein 5/2-Wegeventil gebildet ist.

## Claims

1. A pneumatic sliding valve for switching a pressurized-air flow between a plurality of external ports (5a - 5e) arranged at a valve housing (1) of injection-moulded plastic by means of a valve slide (6) arranged such that it is axially displaceable in the valve housing (1) within a corresponding slide bore (2) formed by a plurality of axially spaced valve bushings (3a - 3d), around which the plastic material is injected and between which pressure chambers (4a - 4e) are arranged so as to communicate with said external ports (5a - 5e),
**characterized in that** said valve bushings (3a - 3d) are of a plastic material having the same melting point as the plastic of the valve housing (1) in order to form a material bond with the valve housing (1) when the material is injection-moulded around them.

2. The pneumatic sliding valve according to claim 1,
**characterized in that** to improve initial melting of the valve bushing (3a - 3d), it has spike or flag-like protrusions (9) of little material thickness on the exterior surface around which the material is injection-moulded.

3. The pneumatic sliding valve according to claim 2,
**characterized in that** the spike or flag-like protrusions (9) of the valve bushing (3a - 3d) have end sections tapering at an angle of between 25° and 35° in order to ensure stable positive engagement, combined with the material bond, between said valve bushing (3a - 3d) and said valve housing (1 ).

4. The pneumatic sliding valve according to claim 1,
**characterized in that** said valve housing (1), unlike said valve bushing (3a - 3d), is of a reinforced plastic material in order to ensure the required housing stability for the attachment of adjacent components.

5. The pneumatic sliding valve according to claim 4,
**characterized in that** the plastic material of said valve housing (1) is of a polyamide (PA) reinforced by up to 60% glass fibres.

6. The pneumatic sliding valve according to claim 1,
**characterized in that** the valve bushings surrounded by injection-moulded material are of a polyamide (PA).

7. The pneumatic sliding valve according to any one of the preceding claims,
**characterized in that** said valve housing (1) is attached to a pressurized-air manifold base plate via a nut and bolt attachment, for which purpose at least one through hole (7a, 7b) extends through said valve housing (1) of said reinforced plastic material in order to receive a corresponding bolt.

8. The pneumatic sliding valve according to any one of the preceding claims,
**characterized in that** at least one pilot valve, for axial adjustment of said valve slide (6) in the manner of a pilot control, is flanged to said valve housing (1) by means of a pin connection.

9. The pneumatic sliding valve according to any one of the preceding claims,
**characterized in that** at least one cover element (8a, 8b) covers said valve bore (2) of said valve housing (1) on at least one end by means of self-tapping screws screwed into the valve housing (1).

10. The pneumatic sliding valve according to any one of the preceding claims,
**characterized in that** precisely four identical valve bushings (3a - 3d) are arranged within said valve housing (1) to form said valve bore (2), wherein in combination with each neighbouring pressure chamber (4a - 4e) a 5/2-way valve is achieved.

## Revendications

1. Vanne à tiroir pneumatique pour commuter un flux d'air comprimé entre plusieurs branchements extérieurs (5a-5e) agencés sur un boîtier de vanne (1) en matière plastique moulée par injection, au moyen d'un tiroir de vanne (6) qui est agencé à déplacement axial dans le boîtier de vanne (1) à l'intérieur d'un perçage de tiroir correspondant qui est formé par plusieurs douilles de vanne (3a-3d) surmoulées et espacées axialement, entre lesquelles sont agencées des chambres à fluide de pression (4a-4e) communiquant avec les branchements extérieurs (5a-5e),
**caractérisée en ce que** les douilles de vanne (3a-3d) sont en une matière plastique qui présente la même température de fusion que la matière plastique du boîtier de vanne (1) pour établir une liaison par coopération de matières avec le boîtier de vanne (1) lors de l'enrobage.

2. Vanne à tiroir pneumatique selon la revendication 1, **caractérisé en ce que** pour améliorer l'assemblage par fusion de la douille de vanne (3a-3d), celle-ci présente sur la surface extérieure surmoulée, des conformations (9) en forme de pointes ou de pattes d'épaisseur de matériau plus faible.

3. Vanne à tiroir pneumatique selon la revendication 2, **caractérisée en ce que** les conformations (9) en forme de pointes ou de pattes de la douille de vanne (3a-3e) se terminent sous un angle de 25° à 35° pour assurer une coopération de formes stable combinée avec la coopération de matières entre la douille de vanne (3a-3e) et le boîtier de vanne (1).

4. Vanne à tiroir pneumatique selon la revendication 1, **caractérisée en ce que**, contrairement à la douille de vanne (3a-3e), le boîtier de vanne (1) est fabriqué en une matière plastique renforcée pour assurer la stabilité nécessaire du boîtier lors de la fixation de composants adjacents.

5. Vanne à tiroir pneumatique selon la revendication 4, **caractérisée en ce que** la matière plastique du boîtier de vanne (1) est en polyamide (PA) qui est renforcé par des fibres de verre jusqu'à 60 %.

6. Vanne à tiroir pneumatique selon la revendication 1, **caractérisée en ce que** les douilles de vanne surmoulées sont en polyamide (PA).

7. Vanne à tiroir pneumatique selon l'une des revendications précédentes, **caractérisée en ce que** la fixation du boîtier de vanne (1) sur une plaque de base répartissant l'air comprimé a lieu via un vissage, et à cet effet, au moins un perçage traversant (7a, 7b) destiné à recevoir la vis correspondante s'étend à travers le boîtier de vanne (1) en matière plastique renforcée.

8. Vanne à tiroir pneumatique selon l'une des revendications précédentes, **caractérisée en ce qu'**au moins une vanne pilote, servant au déplacement axial du tiroir de vanne (6) à la manière d'une commande pilote, est bridée sur le boîtier de vanne (1) au moyen d'une liaison par goupille.

9. Vanne à tiroir pneumatique selon l'une des revendications précédentes, **caractérisé en ce qu'**au moins un élément de couvercle (8a, 8b) ferme le perçage (2) du boîtier de soupape (1) sur au moins une extrémité au moyen de vis autotaraudeuses qui sont vissées dans le boîtier de vanne (1).

10. Vanne à tiroir pneumatique selon l'une des revendications précédentes, **caractérisée en ce qu'**exactement quatre douilles de vanne (3a-3d) individuelles de même structure sont agencées dans le boîtier de vanne (1) pour former le perçage de vanne (2), et en coopération avec les chambres à fluide de pression respectivement voisines (4a-4e), il est formé une vanne à 5 voies/2 positions.
